# EUROPÄISCHE PATENTSCHRIFT

(11) **EP 2 415 715 B1**
(45) Veröffentlichungstag und Bekanntmachung des Hinweises auf die Patenterteilung: **20.04.2016**
(21) Anmeldenummer: 11172753.3
(22) Anmeldetag: 05.07.2011
(51) Int. Cl.: C02F 1/20, C02F 1/52, C02F 3/28

(54) **Vorrichtung und Verfahren zur selektiven Ausscheidung der anorganischen Fracht aus einem System zur anaeroben Abwasserbehandlung**
Device and method for selective removal of inorganic compounds from a system for anaerobic waste water treatment
Dispositif et procédé de séparation sélective de substances inorganiques dans un système pour le traitement anaérobie des eaux usées

(30) Priorität: 03.08.2010 DE 102010033145
(43) Veröffentlichungstag der Anmeldung: 08.02.2012
(73) Patentinhaber: EnviroChemie GmbH, 64380 Rossdorf (DE)
(72) Erfinder: Engelhart, Markus, 60318 Frankfurt am Main (DE); Götz, Willi, 64404 Bickenbach (DE)
(74) Vertreter: Dennemeyer & Associates S.A.

(56) Entgegenhaltungen:
- EP-A2- 1 000 904
- WO-A1-2008/030234
- UENO Y ET AL: "THREE YEARS EXPERIENCE OF OPERATING AND SELLING RECOVERED STRUVITE FROM FULL-SCALE PLANT", ENVIRONMENTAL TECHNOLOGY, SELPER LTD, GB, Bd. 22, 1. Januar 2001 (2001-01-01), Seiten 1373-1381, XP008038945, ISSN: 0959-3330

## Beschreibung

### Gebiet der Erfindung

Die Erfindung betrifft eine Vorrichtung und ein Verfahren zur selektiven Ausscheidung der anorganischen Fracht aus einem System zur anaeroben Abwasserbehandlung neben einer selektiven Trennung und Zurückhaltung von anaerober Biomasse.

### Stand der Technik

Aus der Druckschrift EP 0 625 961 B1 ist ein Verfahren zur Abwasserbehandlung bekannt. Mittels verschiedener Klärbecken, Zentrifugen, sowie Misch- und Trockenvorrichtungen wird dem Abwasser biologische Fracht entzogen. Die abgesonderte Biomasse kann verbrannt oder als Dünger wiederverwendet werden.

Die Druckschriften US 5,514,277, US 5,616,241, US 4,415,453 und US 5,798,043 offenbaren die Behandlung von Abwasser mit einem Anaerobreaktor. Dabei kann Biomasse zu Wiederverwendung in den Anaerobreaktor zurückgeführt werden. Die Druckschriften US 5,514,277 und US 5,616,241 beschreiben zu diesem Zweck eine im Ausfluss des Anaerobreaktors angebrachte Trennvorrichtung, welche die Biomasse ausscheidet. Eine weitere Vorrichtung dient der Aufbereitung der wiederzuverwendenden Biomasse.

Eine in der Druckschrift US 4,415,453 offenbarte Anlage weist ein erstes Absetzbecken auf, um gröbere anorganische Bestandteile auszusondern und zur Wiederverwendung einem Anaerobreaktor zuzuführen. Feinere anorganische Bestandteile werden in einem nachgeschalteten Aerobreaktor aufbereitet und mittels eines zweiten Absetzbeckens zur Wiederverwendung in dem Anaerobreaktor ausgesondert. Die Druckschrift US 4,415,453 beschreibt das Austreten von Gas in dem ersten Absetzbecken. Organische Bestandteile, die den Gasbläschen anhaften, sedimentieren infolgedessen nach dem Austreten des Gases. Darüber hinaus erwähnt die Druckschrift US 4,415,453 die Zugabe von Lauge um saures Abwasser bei Einleitung in den Anaerobreaktor zu neutralisieren.

Aus der Druckschrift US 4,415,453 ist eine mehrstufige Behandlung von Abwasser mit einer anoxischen, einer anaeroben und einer aeroben Phase bekannt. Eine der anaeroben Phase nachgeschaltete Trennvorrichtung separiert Biomasse zur Wiederverwendung in der anoxischen Phase.

In den Druckschriften US 5,419,833, WO 2008/108599 A1 und WO 95/18072 findet die Ausgasung von Kohlendioxid, im Folgenden CO2-Strippung genannt, Erwähnung. Durch eine CO2-Strippung kommt es zu einem Anstieg des pH-Werts. Gemäß den Druckschriften US 5,419,833 und WO 2008/108599 A1 lassen sich durch diesen Effekt Einsparungen erzielen, falls die Zugabe von Lauge erforderlich sein sollte. In der Druckschrift WO 95/1807 wird eine CO2-Strippung zur Verbesserung der Qualität von Biogas verwendet.

Aus dem Stand der Technik sind keine Lösungen zur Behandlung von Abwasser mit einem Anaerobreaktor bekannt, bei denen sich in einem integrierten Verfahren nicht nur organische, sondern auch anorganische Verunreinigungen ausscheiden und wiederverwenden oder einer anderweitigen Nutzung zuführen lassen.

Aufgabe

Aufgabe der Erfindung ist es, eine Vorrichtung und ein Verfahren zur Behandlung von Abwasser mit einem Anaerobreaktor anzugeben, bei dem organische Fracht selektiv rückgeführt wird und die anorganische Fracht ausgeschieden wird.

### Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindung umfasst auch alle sinnvollen und insbesondere alle erwähnten Kombinationen von unabhängigen und/oder abhängigen Ansprüchen.

Zur Lösung der Aufgabe wird eine Vorrichtung zur Behandlung von Abwässern mit einem Anaerobreaktor vorgeschlagen. Der Anaerobreaktor dient der anaeroben Vergärung des Abwassers mittels methanogener Mikroorganismen. Aus dem Anaerobreaktor gelangt das vergorene Abwasser zur Fraktionierung in einen 3-PhasenSeparator. Dieser trennt es unter Ausgasung von Kohlendioxid und anderen Gasen in biologischen Schlamm und separiertes Abwasser, welches anorganische Stoffe enthält, auf. Durch die Ausgasung des Kohlendioxids erhöht sich der pH-Wert des separierten Abwassers. Infolgedessen sinkt die Löslichkeit des separierten Abwassers für anorganische Stoffe, insbesondere für Salze, so dass es zu einer Ausfällung der anorganischen Stoffe, insbesondere der Salze, kommt. Dies geschieht mit einer zeitlichen Verzögerung, so dass ausgefällte anorganische Stoffe, insbesondere Salze, nicht zusammen mit dem biologischen Schlamm aus dem 3-Phasen-Separator ausgeschieden werden.

Mindestens ein Teil des biologischen Schlamms wird wiederverwendet. Dazu weist die Vorrichtung Mittel zur Rückführung mindestens eines Teils des biologischen Schlamms in den Anaerobreaktor und/oder zur Weiterleitung mindestens eines Teils des biologischen Schlamms in mindestens einen weiteren Anaerobreaktor auf. Einerseits lassen sich hierdurch Betriebskosten einsparen. Andererseits werden durch die Rückführung das Schlammalter und damit die Qualität des in dem Anaerobreaktor enthaltenen biologischen Schlamms verbessert.

Zur Unterstützung der Ausfällung der anorganischen Stoffe, insbesondere Salze, aus dem separierten Abwasser wird das separierte Abwasser aus dem 3-Phasen-Separator in einen Kristallisationsreaktor geleitet. Aus dem Kristallisationsreaktor gelangt das separierte Abwasser in eine nachgeschaltete Trennvorrichtung, in der die ausgefällten anorganischen Stoffe, insbesondere Salze, aus dem separierten Abwasser entfernt werden.

Würde zur Förderung des separierten Abwassers eine Pumpe verwendet, so bestünde die Gefahr einer Verstopfung oder Zerstörung durch die ausgefällten anorganischen Stoffe, insbesondere Salze. Die Mittel zum Fördern des separierten Abwassers in dem Kristallisationsreaktor und/oder in die nachgeschaltete Trennvorrichtung fördern daher in einer bevorzugten Weiterbildung der Erfindung das separierte Abwasser ausschließlich mittels Schwerkraft. Hierzu muss die potentielle Energie des separierten Abwassers, wenn es aus dem 3-Phasen-Separator austritt, größer sein als die potentielle Energie des separierten Abwassers bei Eintritt in den Kristallisationsreaktor und/oder in die nachgeschaltete Trennvorrichtung. Vorzugsweise wird das separierte Abwasser im freien Fall gefördert. Das heißt, das separierte Abwasser fließt lotrecht von dem 3-Phasen-Separator in den Kristallisationsreaktor und/oder in die nachgeschaltete Trennvorrichtung.

Bereits ausgefällte anorganische Stoffe, insbesondere Salze, werden als Keimbildner zur Initiierung der Ausfällung von gelösten anorganischen Stoffen, insbesondere Salzen, in den Kristallisationsreaktor zurückgeführt. An den Keimbildnern lagern sich die aus dem separierten Abwasser ausfällenden anorganischen Stoffe an. Daher weist die Vorrichtung Mittel zur Rückführung mindestens eines Teils der ausgefällten anorganischen Stoffe, insbesondere Salze, in den Kristallisationsreaktor und/oder Mittel zum Weiterleiten mindestens eines Teils der ausgefällten anorganischen Stoffe, insbesondere Salze, in mindestens einen weiteren Kristallisationsreaktor auf.

Die vorgeschlagene Vorrichtung kommt mit einem Minimum an Hilfsstoffen aus.

Die Vorrichtung kann für hoch belastete industrielle Abwässer eingesetzt werden, z. B. Abwässer aus der Lebensmittel- oder Papierindustrie oder aus der Landwirtschaft.

Falls die Zugabe der Keimbildner nicht ausreicht, kann die Ausfällung von anorganischen Stoffen, insbesondere Salzen, in dem Kristallisationsreaktor durch Zugabe von Lauge unterstützt werden. Eine Weiterbildung der erfindungsgemäßen Vorrichtung weist daher Mittel zum Einleiten von Lauge in den Kristallisationsreaktor auf.

Alternativ oder ergänzend kann die Ausfällung der anorganischen Stoffe, insbesondere Salze, durch Mittel zum Einleiten eines Gases in den Kristallisationsreaktor unterstützt werden. Perlt das Gas - vorzugsweise Umgebungsluft - durch das in dem Kristallisationsreaktor enthaltene separierte Abwasser, kommt es zu einer weiteren CO2-Strippung. Infolgedessen steigt wiederum der pH-Wert des separierten Abwassers und die Löslichkeit für anorganische Stoffe, insbesondere Salze, verringert sich.

Bevorzugt erfolgt hierbei die Förderung des separierten Abwassers in den Kristallisationsreaktor über ein Fallrohr mit einer Länge von minimal 0,5 m und maximal 1,5 m.

Die nachgeschaltete Trennvorrichtung scheidet die ausgefällten anorganischen Stoffe, insbesondere Salze, aus dem separierten Abwasser als Fällschlamm aus. Das aus der Trennvorrichtung austretende gereinigte Abwasser kann verwendet werden, um den aus dem 3-Phasen-Separator austretenden biologischen Schlamm und/oder das aus dem 3-Phasen-Separator austretende separierte Abwasser fließfähig zu halten. Eine bevorzugte Weiterbildung der Erfindung weist daher Mittel zum teilweisen oder vollständigen Zurückführen des aus der nachgeschalteten Trennvorrichtung austretenden gereinigten Abwassers zu dem biologischen Schlamm und/oder zu dem separierten Abwasser auf.

In einer bevorzugten Weiterbildung der Erfindung weist die Vorrichtung außerdem eine Schlammvorlage zur Aufnahme des biologischen Schlamms aus dem 3-Phasen-Separator und einen Bypass mit einem Ventil auf. Der Bypass ermöglicht, das Abwasser an dem Anaerobreaktor vorbei in die Schlammvorlage zu leiten.

Die infolge der CO₂-Strippung stattfindende Ausfällung von anorganischen Stoffen, insbesondere Salzen, kann die Zugabe eines Flockungshilfsmittels erfordern. Das Flockungshilfsmittel verhindert, dass die ausgefällten anorganischen Stoffe zu feinflockig sind und infolgedessen von der Trennvorrichtung nicht oder nur unvollständig ausgefiltert werden. Die Wirkung des Flockungshilfsmittels beruht darauf, dass es freie Valenzen besitzt, die auf Schwebstoffe wirken und diese zu Flocken zusammenfügt. Als Flockungshilfsmittel eignen sich Stoffe mit langkettigen, geladenen organischen Molekühlen, z.B. Polyacrylamid.

Zur Zugabe des Flockungshilfsmittels zu dem in dem Anaerobreaktor vergorenen Abwasser weist eine weitere bevorzugte Ausgestaltung der Erfindung entsprechende Mittel auf. Diese Mittel sind dem 3-Phasen-Separator vorzugsweise vorgeschaltet, so dass das Flockungshilfsmittel dem aus dem Anaerobreaktor ausgetretenen Inhalt vor Eintritt in den 3-Phasen-Separator zugegeben wird, können dem 3-Phasen-Separator aber auch nachgeschaltet sein, so dass das Flockungshilfsmittel dem separierten Abwasser zugegeben wird.

Im Folgenden werden einzelne Verfahrensschritte näher beschrieben. Das zu schildernde Verfahren kann auch weitere, nicht genannte Schritte aufweisen.

Ein erfindungsgemäßes Verfahren zur Behandlung von Abwasser umfasst die Schritte anaerobe Vergärung des Abwasser mittels methanogener Mikroorganismen in einem Anaerobreaktor, Fraktionierung des in dem Anaerobreaktor vergorenen Abwassers mittels eines 3-Phasen-Separators, wobei das Abwasser unter Ausgasung von Kohlendioxid und anderen Gasen in biologischen Schlamm und separiertes Abwasser, welches anorganische Stoffe enthält, aufgetrennt wird, Rückführung mindestens eines Teils des biologischen Schlamms in den Anaerobreaktor und/oder Weiterleitung mindestens eines Teils des biologischen Schlamms in mindestens einen weiteren Anaerobreaktor, Förderung des separierten Abwassers mittels Schwerkraft in einen Kristallisationsreaktor und/oder in eine nachgeschaltete Trennvorrichtung, durch Kristallisation unterstützte Ausfällung von anorganischen Stoffen, insbesondere Salzen, Ausscheidung der ausgefällten anorganischen Stoffe, insbesondere Salze, aus dem separierten Abwasser in der nachgeschalteten Trennvorrichtung, und Rückführung mindestens eines Teils der ausgefällten anorganischen Stoffe als Keimbildner in den Kristallisationsreaktor und/oder Weiterleitung mindestens eines Teils der ausgefällten anorganischen Stoffe als Keimbildner in mindestens einen weiteren Kristallisationsreaktor.

In einer weiteren bevorzugten Weiterbildung des erfindungsgemäßen Verfahrens wird Lauge in den Kristallisationsreaktor eingeleitet.

In einer weiteren bevorzugten Weiterbildung des erfindungsgemäßen Verfahrens wird Gas in den Kristallisationsreaktor eingeleitet.

In einer weiteren bevorzugten Weiterbildung des erfindungsgemäßen Verfahrens legt das separierte Abwasser bei der Einleitung in den Kristallisationsreaktor eine Fallstrecke von minimal 0,5 m und maximal 1,5 m zurück.

In einer weiteren bevorzugten Weiterbildung des erfindungsgemäßen Verfahrens wird das aus der nachgeschalteten Trennvorrichtung austretende gereinigte Abwasser vollständig oder teilweise dem biologischen Schlamm oder dem separierten Abwasser zugeführt.

In einer weiteren bevorzugten Weiterbildung des erfindungsgemäßen Verfahrens ermöglicht ein Ventil, das Abwasser durch einen Bypass an dem Anaerobreaktor vorbei in eine Schlammvorlage zu leiten, wobei die Schlammvorlage zur Aufnahme des biologischen Schlamms aus dem 3-Phasen-Separator dient.

In einer weiteren bevorzugten Weiterbildung des erfindungsgemäßen Verfahrens wird dem in dem Anaerobreaktor vergorenen Abwasser oder dem aus dem 3-Phasen-Separator ausgetretenen separierten Abwasser ein Flockungshilfsmittel zugegeben.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: ein System zur anaeroben Behandlung von Abwässern unter selektiver Rückführung von Biomasse mit einem Filter als Trennvorrichtung; und
- Fig. 2: ein System zur anaeroben Behandlung von Abwässern unter selektiver Rückführung von Biomasse mit einem Absetzbecken als Trennvorrichtung.

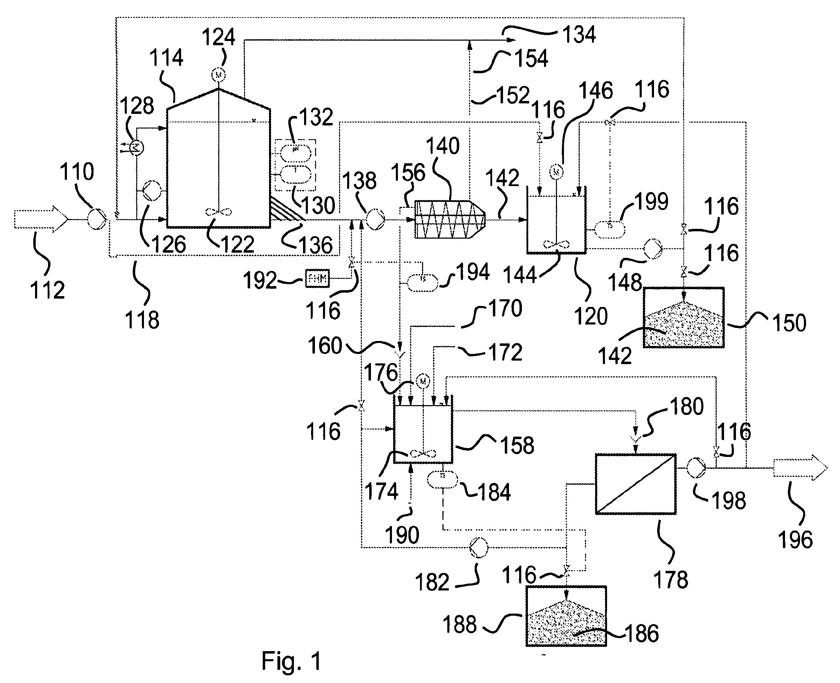

Fig. 1 zeigt ein bevorzugtes Ausführungsbeispiel der Erfindung. Eine erste Pumpe 110 fördert das Abwasser 112 in den Anaerobreaktor 114. Um eine Überlastung des Anaerobreaktors 114 zu vermeiden, kann ein Ventil 116 geöffnet werden, so dass das Abwasser 112 durch einen Bypass 118 an dem Anaerobreaktor 114 vorbei in eine Schlammvorlage 120 geleitet wird.

Im Innern des Anaerobreaktors 114 befindet sich eine erste bewegliche Vorrichtung 122 die von einem ersten Motor 124 angetrieben wird und den Inhalt des Anaerobreaktors 114 durchmischt. Im thermophilen Betrieb beträgt die Temperatur im Innern des Anaerobreaktors 114 mindestens aber 40 °C, bevorzugt 50 - 57 °C. Wird der Anaerobreaktor 114 psychrophil betrieben herrscht im Inneren eine Temperatur von weniger als 20 °C. Vorzugsweise befindet die Temperatur im Innern des Anaerobreaktors 114 allerdings im mesophilen Temperaturbereich, nimmt also einen Wert zwischen 20 und 40 °C an. Bevorzugt beläuft sich die Temperatur im Innern des Anaerobreaktors 114 auf einen ein Wert zwischen 35 und 37 °C.

Um den Anaerobreaktor 114 zu beheizen, zirkuliert eine zweite Pumpe 126 den Inhalt des Anaerobreaktors 114 durch ein Heizelement 128. Ein Temperaturfühler 130 misst die Temperatur im Innern des Anaerobreaktors 114. Der pH-Wert des Inhalts des Anaerobreaktors 114 wird durch eine pH-Messsonde 132 gemessen.

Die in dem Anaerobreaktor 114 ohne Vorhandensein von Sauerstoff ablaufenden mikrobiologischen Zersetzungsprozesse dienen der Entfernung schädlicher oder störender organischer Kohlenstoffverbindungen. Dabei gewinnen Bakterien die für ihren Stoffwechsel erforderliche Energie aus der Umsetzung organischer Kohlenstoffverbindungen zu organischen Säuren. In weiterer Folge werden hauptsächlich Methan, Kohlendioxid und Schwefelwasserstoff freigesetzt. Dieses sogenannte Biogas 134 kann zur Energiegewinnung genutzt werden.

An dem Anaerobreaktor 114 ist ein höhenverstellbarer Auslauf 136 angebracht. Der aus dem höhenverstellbaren Auslauf 136 austretende Inhalt des Anaerobreaktors 114 wird von einer dritten Pumpe 138 in den 3-Phasen-Separator 140 befördert. Vorzugsweise handelt es sich bei dem 3-Phasen-Separator 140 um einen Dekanter, auch Dekantierzentrifuge, Separator, Purifikator oder Klarifikator genannt. Der 3-Phasen-Separator 140 fraktioniert den aus dem Anaerobreaktor 114 ausgetretenen Inhalt in 3 Phasen.

Eine erste Phase - biologischer Schlamm 142 - gelangt in die Schlammvorlage 120. Eine zweite bewegliche Vorrichtung 144, die sich im Innern der Schlammvorlage 120 befindet und von einem zweiten Motor 146 angetrieben wird, verhindert, dass sich der biologische Schlamm 142 in der Schlammvorlage 120 absetzt.

Eine vierte Pumpe 148 saugt den biologischen Schlamm 142 aus der Schlammvorlage 120 ab und fördert diesen je nach Bedarf teilweise oder vollständig zur Wiederverwertung zurück in den Anaerobreaktor 114. Überschüssiger biologischer Schlamm 142, der nicht der Wiederverwertung zugeführt werden kann, wird abgezweigt und gelangt in einen ersten Sammelbehälter 150. Der biologische Schlamm 142 aus dem ersten Sammelbehälter 150 kann beispielsweise verbrannt oder als Dünger wiederverwendet werden.

Durch die Zentrifugalwirkung kommt es in dem als 3-PhasenSeparator 140 verwendeten Dekanter zu einer CO2-Strippung. Neben Kohlendioxid 152 tritt auch Methan 154 aus. Beide Gase sowie möglicherweise austretende weitere Gase werden als eine zweite Phase abgeführt.

Als eine dritte Phase tritt von dem biologischen Schlamm 142 und den Gasen separiertes Abwasser 156 aus dem 3-PhasenSeparator 140 aus. Lotrecht unter dem 3-Phasen-Separator 140 befindet sich der Kristallisationsreaktor 158, wodurch das separierte Abwasser 156 mittels eines ersten Fallrohrs 160 im freien Fall von dem 3-Phasen-Separator 140 in den Kristallisationsreaktor 158 geleitet werden kann. Um zu verhindern, dass es in dem ersten Fallrohr 160 zu einer Ausfällung von anorganischen Stoffen, insbesondere von Salzen, kommt, die das erste Fallrohr 160 verstopfen können, ist das erste Fallrohr 160 möglichst kurz ausgeführt. Als praktikabel hat sich eine Länge des ersten Fallrohrs 160 von 0,5 bis 5 m erwiesen. Vorzugsweise beträgt die Länge des ersten Fallrohrs 160 aber nicht mehr als 1,5 m.

Um das Ausfällen der anorganischen Stoffe zu unterstützen, kann eine Lauge 170 beispielsweise Natronlauge in den Kristallisationsreaktor 158 eingeleitet werden. Darüber hinaus können weitere Hilfsstoffe 172 wie zum Beispiel Magnesiumammoniumphosphat, Magnesiumoxid oder Magnesiumchlorid dem Kristallisationsreaktor 158 zugegeben werden.

Eine dritte bewegliche Vorrichtung 174 im Innern des Kristallisationsreaktors 158, die von einem dritten Motor 176 angetrieben wird, durchmischt den Inhalt des Kristallisationsreaktors 158 und verhindert somit, dass sich ausgefällte anorganischen Stoffe, insbesondere Salze, ablagern.

Lotrecht unter dem Kristallisationsreaktor 158 befindet sich die Trennvorrichtung 178, die in dem in Fig. 1 dargestellten System als ein Filter ausgeführt ist. Ein zweites Fallrohr 180 leitet den Inhalt des Kristallisationsreaktors 158 in die Trennvorrichtung 178. Diese trennt die ausgefällten anorganischen Stoffe von flüssigen Bestandteilen.

Die ausgefällten anorganischen Stoffe werden teilweise oder vollständig mittels einer fünften Pumpe 182 als Keimbildner in den Kristallisationsreaktor 158 zurückgeführt. Um die Menge der zurückgeführten anorganischen Stoffe zu steuern ist eine erste TS-Sonde 184 an dem Kristallisationsreaktor 158 angebracht.

TS-Sonden dienen der Messung eines sogenannten Schlammindexes. Dieser ergibt sich aus dem Quotienten des Schlammvolumens und der Masse der in dem Schlamm enthaltenen Trockensubstanz.

Die TS-Sonde 184 steuert ein Ventil 116. In Abhängigkeit von dem Schlammindex des Inhalts des Kristallisationsreaktors 158 wird das Ventil 116 geöffnet, so dass überschüssige ausgefällte anorganische Stoffe, insbesondere Salze, die nicht in den Kristallisationsreaktor 158 zurückgeführt werden, als Fällschlamm 186 in einen zweiten Sammelbehälter 188 gelangen.

Auch ist es möglich, die ausgefällten anorganischen Stoffe dem aus dem Anaerobreaktor 114 ausgetretenen Inhalt vor der Einleitung in den 3-Phasen-Separator 140 als Keimbildner zuzugeben.

Zur weiteren Unterstützung der Ausfällung von anorganischen Stoffen wird ein Gas 190, vorzugsweise Umgebungsluft, in den Kristallisationsreaktor 158 eingeleitet. Hierzu ist am Boden des Kristallisationsreaktors 158 eine Belüftungseinrichtung angebracht, aus der das Gas 190 durch den Inhalt des Kristallisationsreaktors 158 perlt.

Zur Dosierung des Flockungshilfsmittels 192 befindet sich eine zweite TS-Sonde 194 an dem ersten Fallrohr 160. Die zweite TS-Sonde 194 steuert ein Ventil 116, das den Zustrom des Flockungshilfsmittels 192 freigibt oder unterbindet.

Da das Flockungshilfsmittel 192 erst wirksam wird, sobald eine Flockungsreaktion stattfindet, kann das Flockungshilfsmittel 192 dem aus dem Anaerobreaktor 114 ausgetretenen Inhalt vor Einleitung in den 3-Phasen-Separator 140 zugegeben werden. Alternativ ist eine Einleitung in das separierte Abwasser 156 möglich.

Bei den aus der Trennvorrichtung 178 ausgeschiedenen flüssigen Bestandteilen handelt es sich um gereinigtes Abwasser 196, das von einer sechsten Pumpe 198 befördert wird.

Ein erster Anteil des gereinigten Abwassers 196 kann in den Kristallisationsreaktor 158 zurückgeführt werden, um die Fließfähigkeit oder die Absetzeigenschaften von dessen Inhalt zu verbessern.

Analog kann ein zweiter Anteil des gereinigten Abwassers 196 zur Verdünnung in die Schlammvorlage 120 eingeleitet werden. Zu diesem Zweck ist eine dritte TS-Sonde 199 an der Schlammvorlage 120 angebracht. Die dritte TS- Sonde 199 misst den Schlammindex des Inhalts der Schlammvorlage 120 und steuert in Abhängigkeit dessen ein Ventil 116. Letztgenanntes Ventil 116 gibt den Zustrom des zweiten Anteils des gereinigten Abwassers 196 in die Schlammvorlage 120 frei oder unterbindet diesen.

Überschüssiges gereinigtes Abwasser 196, das nicht als erster oder zweiter Anteil im System verbleibt, wird zur weiteren Behandlung oder Nutzung ausgeleitet.

Das in Fig. 1 dargestellte Ausführungsbeispiel weist die folgenden Rohrleitungen auf. Eine Rohrleitung, die das Abwasser 112 der ersten Pumpe 110 zuführt, eine Rohrleitung zwischen der ersten Pumpe 110 und dem Anaerobreaktor 114, eine Rohrleitung zwischen dem Anaerobreaktor 114 und der zweiten Pumpe 126, eine Rohrleitung zwischen der zweiten Pumpe 126 und dem Heizelement 128, eine Rohrleitung zwischen dem Heizelement 128 und dem Anaerobreaktor 114, eine Rohrleitung zwischen der ersten Pumpe 110 und dem Heizelement 128, eine Rohrleitung zwischen dem höhenverstellbaren Auslauf 136 und der dritten Pumpe 138, eine Rohrleitung zwischen der Pumpe 138 und dem 3-PhasenSeparator 140, eine Rohrleitung zwischen dem 3-PhasenSeparator 140 und der Schlammvorlage 120, eine Rohrleitung zwischen der Schlammvorlage 120 und der vierten Pumpe 148, eine Rohrleitung zwischen der vierten Pumpe 148 und einem Ventil 116, eine Rohrleitung zwischen Letztgenanntem Ventil 116 und dem ersten Sammelbehälter 150, eine Rohrleitung zwischen der vierten Pumpe 148 und einem Ventil 116, eine Rohrleitung zwischen letztgenanntem Ventil 116 und dem Anaerobreaktor 114, eine Rohrleitung zwischen letztgenanntem Ventil 116 und dem Heizelement 128, eine Rohrleitung an dem Anaerobreaktor 114 zur Ableitung von Gasen, eine Rohrleitung an dem 3-PhasenSeparator 140 zur Ableitung von Gasen, das erste Fallrohr 160 zwischen dem 3-Phasen-Separator 140 und dem Kristallisationsreaktor 158, eine Rohrleitung die dem Kristallisationsreaktor 158 die Lauge 170 zuführt, eine Rohrleitung die dem Kristallisationsreaktor 158 die Hilfsstoffe 172 zuführt, ein zweites Fallrohr 180 zwischen dem Kristallisationsreaktor 158 und der Trennvorrichtung 178, eine Rohrleitung zum Einleiten von Gas 190 in den Kristallisationsreaktor 158, eine Rohrleitung zwischen der Trennvorrichtung 178 und der sechsten Pumpe 198, eine Rohrleitung zwischen der sechsten Pumpe 198 und einem Ventil 116, eine Rohrleitung zwischen letztgenanntem Ventil 116 und dem Kristallisationsreaktor 158, eine Rohrleitung zwischen der sechsten Pumpe 198 und einem Ventil 116, eine Rohrleitung zwischen letztgenanntem Ventil 116 und der Schlammvorlage 120, eine Rohrleitung die das gereinigte Abwasser 196 von der sechsten Pumpe 198 aus dem System hinausführt, eine Rohrleitung von der Trennvorrichtung 178 zu einem Ventil 116, eine Rohrleitung von letztgenanntem Ventil 116 zu dem zweiten Sammelbehälter 188, eine Rohrleitung von der Trennvorrichtung 178 zu der fünften Pumpe 182, eine Rohrleitung von der fünften Pumpe 182 zu dem Kristallisationsreaktor 158, eine Rohrleitung von der fünften Pumpe 182 zu einem Ventil 116, eine Rohrleitung von letztgenanntem Ventil 116 zu der dritten Pumpe 138, eine Rohrleitung von einer Vorrichtung zur Dosierung des Flockungshilfsmittels 192 zu einem Ventil 116, eine Rohrleitung von letztgenanntem Ventil 116 zu der dritten Pumpe 138, eine Rohrleitung von der ersten Pumpe 110 zu einem Ventil 116 und eine Rohrleitung von letztgenanntem Ventil 116 zu der Schlammvorlage 120.

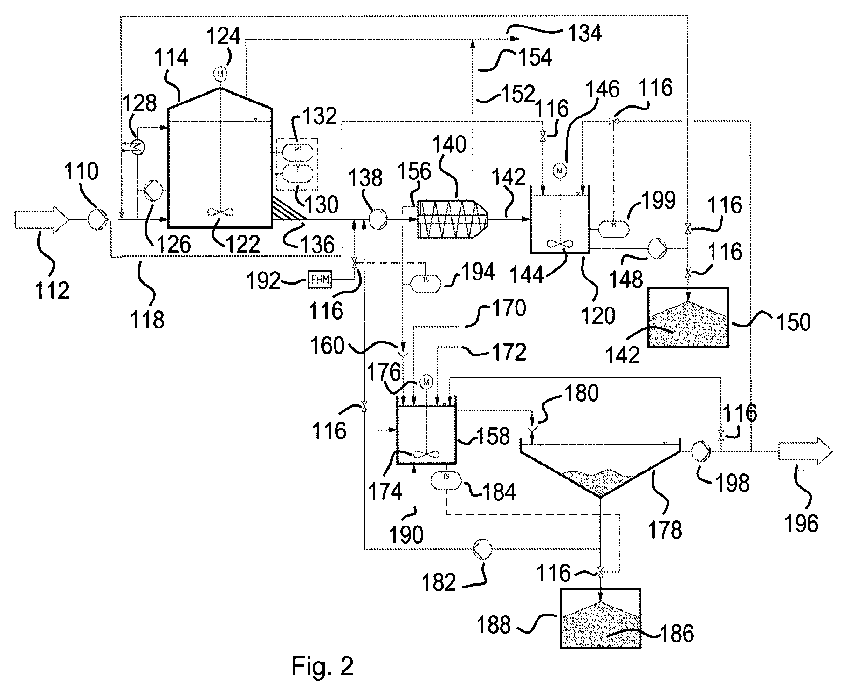

Das in Fig. 2 dargestellte System zur anaeroben Behandlung von Abwässern weist im Unterschied zu dem in Fig. 1 dargestellten System als Trennvorrichtung 178 statt eines Filters ein Absetzbecken auf. Die übrigen in Fig. 2 dargestellten Komponenten und Rohrleitungen gleichen den Komponenten und Rohrleitungen des in Fig. 1 dargestellten Systems.

### Bezugszeichen

- 110: erste Pumpe
- 112: Abwasser
- 114: Anaerobreaktor
- 116: Ventil
- 118: Bypass
- 120: Schlammvorlage
- 122: erste bewegliche Vorrichtung
- 124: erster Motor
- 126: zweite Pumpe
- 128: Heizelement
- 130: Temperaturfühler
- 132: pH-Messsonde
- 134: Biogas
- 136: höhenverstellbarer Auslauf
- 138: dritte Pumpe
- 140: 3-Phasen-Separator
- 142: biologischer Schlamm
- 144: zweite bewegliche Vorrichtung
- 146: zweiter Motor
- 148: vierte Pumpe
- 150: erster Sammelbehälter
- 152: Kohlendioxid
- 154: Methan
- 156: separiertes Abwasser
- 158: Kristallisationsreaktor
- 160: erstes Fallrohr
- 170: Lauge
- 172: Hilfsstoffe
- 174: dritte bewegliche Vorrichtung
- 176: dritter Motor
- 178: Trennvorrichtung
- 180: zweites Fallrohr
- 182: fünfte Pumpe
- 184: erste TS-Sonde
- 186: Fällschlamm
- 188: zweiter Sammelbehälter
- 190: Gas
- 192: Flockungshilfsmittel
- 194: zweite TS-Sonde
- 196: gereinigtes Abwasser
- 198: sechste Pumpe
- 199: dritte TS-Sonde

### zitierte Literatur

### zitierte Patentliteratur

EP 0 625 961 B1
US 5,514,277
US 5,616,241
US 4,415,453
US 5,798,043
US 5,419,833
WO 2008/108599 A1
WO 95/18072

## Patentansprüche

1. Vorrichtung zur Behandlung von Abwässern (112) mit folgenden Komponenten:
a) einem Anaerobreaktor (114) zur anaeroben Vergärung des Abwassers (112);
b) einem 3-Phasen-Separator (140) zur Fraktionierung des in dem Anaerobreaktor (114) vergorenen Abwassers (112), wobei das Abwasser (112) unter Ausgasung insbesondere von Kohlendioxid (152) in biologischen Schlamm (142) und separiertes Abwasser (156), welches anorganische Stoffe enthält, aufgetrennt wird;
b1) Mitteln (148) zum Zurückführen mindestens eines Teils des biologischen Schlamms (142) in den Anaerobreaktor (114) und/oder zur Weiterleitung mindestens eines Teils des biologischen Schlamms (142) in mindestens einen weiteren Anaerobreaktor;
c) einem Kristallisationsreaktor (158) zur Unterstützung von Ausfällung anorganischer Stoffe aus dem separierten Abwasser (156) ;
d) einer nachgeschalteten Trennvorrichtung (178) zur Abscheidung der ausgefällten anorganischen Stoffe aus dem separierten Abwasser (156);
d1) Mitteln zum Fördern des separierten Abwassers (156) in den Kristallisationsreaktor (158) und/oder in die nachgeschaltete Trennvorrichtung (178), wobei die Mittel zur Förderung des separierten Abwassers (156) das separierte Abwasser (156) mittels Schwerkraft fördern; und
e) Mittel (182) zum Rückführen mindestens eines Teils der ausgefällten anorganischen Stoffe als Keimbildner in den Kristallisationsreaktor (158) und/oder Mittel zum Weiterleiten mindestens eines Teils der ausgefällten anorganischen Stoffe als Keimbildner in mindestens einen weiteren Kristallisationsreaktor.

2. Vorrichtung nach dem vorhergehenden Anspruch,
**gekennzeichnet durch**
Mittel zum Einleiten von Lauge (170) in den Kristallisationsreaktor (158).

3. Vorrichtung nach einem der vorhergehenden Ansprüche,
**gekennzeichnet durch**
Mittel zum Einleiten eines Gases (190) in den Kristallisationsreaktor (158).

4. Vorrichtung nach einem der vorhergehenden Ansprüche,
**dadurch gekennzeichnet,**
**dass** die Förderung des separierten Abwassers (156) in den Kristallisationsreaktor (158) über ein Fallrohr mit einer Länge von minimal 0,5 m und maximal 1,5 m erfolgt.

5. Vorrichtung nach einem der vorhergehenden Ansprüche,
**gekennzeichnet durch**
Mittel zum teilweisen oder vollständigen Zuführen des aus der nachgeschalteten Trennvorrichtung (178) austretenden gereinigten Abwassers (196) zu dem biologischen Schlamm (142) und/oder dem separierten Abwasser (156).

6. Vorrichtung nach einem der vorhergehenden Ansprüche,
**gekennzeichnet durch**
a) eine Schlammvorlage (120) zur Aufnahme des biologischen Schlamms (142) aus dem 3-Phasen-Separator (140); und **durch**
b) einen Bypass (118) mit einem Ventil (116), der ermöglicht, das Abwasser (112) an dem Anaerobreaktor (114) vorbei in die Schlammvorlage (120) zu leiten.

7. Vorrichtung nach einem der vorhergehenden Ansprüche,
**dadurch gekennzeichnet,**
**dass** sie dem 3-Phasen-Separator (140) vorgeschaltete Mittel zur Zugabe eines Flockungshilfsmittels (192) zu dem in dem Anaerobreaktor (114) vergorenen Abwasser (112) aufweist.

8. Verfahren zur Behandlung von Abwasser (112) mit folgenden Schritten:
a) anaerobe Vergärung des Abwassers (112) in einem Anaerobreaktor (114);
b) Fraktionierung des in dem Anaerobreaktor (114) vergorenen Abwassers (112) mittels eines 3-Phasen-Separators (140), wobei das Abwasser (112) unter Ausgasung insbesondere von Kohlendioxid (152) in biologischen Schlamm (142) und separiertes Abwasser (156), welches anorganische Stoffe enthält, aufgetrennt wird;
b1) Rückführung mindestens eines Teils des biologischen Schlamms (142) in den Anaerobreaktor (114) und/oder Weiterleitung mindestens eines Teils des biologischen Schlamms (142) in mindestens einen weiteren Anaerobreaktor;
b2) Förderung des separierten Abwassers (156) mittels Schwerkraft in einen Kristallisationsreaktor (158) und/oder in eine nachgeschaltete Trennvorrichtung (178);
c) durch Kristallisation unterstützte Ausfällung anorganischer Stoffe aus dem separierten Abwasser (156);
d) Abscheidung der ausgefällten anorganischen Stoffe aus dem separierten Abwasser (156) in der nachgeschalteten Trennvorrichtung (178); und
e) Rückführung mindestens eines Teils der ausgefällten anorganischen Stoffe als Keimbildner in den Kristallisationsreaktor (158) und/oder Weiterleitung mindestens eines Teils der ausgefällten anorganischen Stoffe als Keimbildner in mindestens einen weiteren Kristallisationsreaktor (158).

9. Verfahren nach dem vorhergehenden Verfahrensanspruch,
**dadurch gekennzeichnet,**
**dass** Lauge (170) in den Kristallisationsreaktor (158) eingeleitet wird.

10. Verfahren nach einem der vorhergehenden Verfahrensansprüche,
**dadurch gekennzeichnet,**
**dass** Gas (190) in den Kristallisationsreaktor (158) eingeleitet wird.

11. Verfahren nach einem der vorhergehenden Verfahrensansprüche,
**dadurch gekennzeichnet,**
**dass** das separierte Abwasser (156) bei der Einleitung in den Kristallisationsreaktor (158) eine Fallstrecke von minimal 0,5 m und maximal 1,5 m zurücklegt.

12. Verfahren nach einem der vorhergehenden Verfahrensansprüche,
**dadurch gekennzeichnet,**
**dass** das aus der nachgeschalteten Trennvorrichtung (178) austretende gereinigte Abwasser (196) teilweise oder vollständig dem biologischen Schlamm (142) und/oder dem separierten Abwasser (156) zugeführt wird.

13. Verfahren nach einem der vorhergehenden Verfahrensansprüche,
**dadurch gekennzeichnet,**
**dass** ein Ventil (116) ermöglicht, das Abwasser (112) durch einen Bypass (118) an dem Anaerobreaktor (114) vorbei in eine Schlammvorlage (120) zu leiten,
wobei die Schlammvorlage (120) zur Aufnahme des biologischen Schlamms (142) aus dem 3-Phasen-Separator (140) dient.

14. Verfahren nach einem der vorhergehenden Verfahrensansprüche,
**dadurch gekennzeichnet,**
**dass** ein Flockungshilfsmittel (192) zu dem in dem Anaerobreaktor (114) vergorenen Abwasser (112) zugegeben wird.

## Claims

1. Device for treatment of sewage (112) with the following components:
a) an anaerobic reactor (114) for anaerobic fermentation of the sewage (112);
b) a 3-phase separator (140) for fractionation of the sewage (112) fermented in the anaerobic reactor (114), wherein the sewage (112) is separated through outgassing particularly into carbon dioxide (152), biological sludge (142) and separate sewage (156) containing inorganic matter;
b1) means (148) for returning at least part of the biological sludge (142) to the anaerobic reactor (114) and/or forwarding at least a part of the biological sludge (142) to at least one additional anaerobic reactor;
c) a crystallisation reactor (158) to support precipitation of inorganic matter from the separated sewage (156);
d) a downstream separation device (178) to separate the precipitated inorganic matter from the separated sewage (156);
d1) means to convey the separated sewage (156) to the crystallisation reactor (158) and/or to the downstream separation device (178), wherein the means for conveying the separated sewage (156) conveys the separated sewage (156) under the effect of gravity; and
e) means (182) for returning at least a part of the precipitated inorganic matter as nucleating agents to the crystallisation reactor (158) and/or means for forwarding at least a part of the precipitated inorganic matter as nucleating agents to at least one further crystallisation reactor.

2. Device according to the preceding claim,
**characterised by**
means for introducing liquor (170) into the crystallisation reactor (158).

3. Device according to any one of the preceding claims,
**characterised by**
means for introducing a gas (190) into the crystallisation reactor (158).

4. Device according to one of the preceding claims,
**characterised in that**
the conveyance of the separated sewage (156) to the crystallisation reactor (158) is effected via a down pipe with a length of at least 0.5 m and at most 1.5 m.

5. Device according to one of the preceding claims,
**characterised by**
means for the partial or full supply of the purified sewage (196) exiting from the downstream separation device (178) to the biological sludge (142) and/or the separated sewage (156).

6. Device according to one of the preceding claims,
**characterised by**
a) a sludge collector (120) for receiving the biological sludge (142) from the 3-phase separator (140); and
b) a bypass (118) with a valve (116) which enables the sewage (112) to be guided to the sludge collector (120) and bypass the anaerobic reactor (114).

7. Device according to one of the preceding claims,
**characterised in that**
the device comprises means upstream of the 3-phase separator (140) to add a flocculation aid (192) to the sewage (112) fermented in the anaerobic reactor (114).

8. Method for treating sewage (112) comprising the steps of:
a) anaerobic fermentation of the sewage (112) in an anaerobic reactor (114);
b) fractionation of the sewage (112) fermented in the anaerobic reactor (114) by means of a 3-phase separator (140), wherein the sewage (112) is separated through outgassing particularly into carbon dioxide (152), biological sludge (142) and separate sewage (156) containing inorganic matter;
b1) returning at least part of the biological sludge (142) to the anaerobic reactor (114) and/or for forwarding at least part of the biological sludge (142) to at least one additional anaerobic reactor;
b2) conveyance of the separated sewage (156) under the effect of gravity to a crystallisation reactor (158) and/or to a downstream separation device (178);
c) precipitation of inorganic matter from the separated sewage (156) assisted by crystallisation;
d) separation of precipitated inorganic matter from the separated sewage (156) in the downstream separation device (178); and
e) returning at least a part of the precipitated inorganic matter as nucleating agents to the crystallisation reactor (158) and/or forwarding at least a part of the precipitated inorganic matter as nucleating agents to at least one further crystallisation reactor (158).

9. Method according to the preceding method claim,
**characterised in that**
liquor (170) is introduced into the crystallisation reactor (158).

10. Method according to one of the preceding method claims,
**characterised in that**
gas (190) is introduced into the crystallisation reactor (158).

11. Method according to one of the preceding method claims,
**characterised in that**
the separated sewage (156) falls a distance of at least 0.5 m and at most 1.5 m when being introduced into the crystallisation reactor (158).

12. Method according to one of the preceding method claims,
**characterised in that**
the purified sewage (196) exiting from the downstream separation device (178) is partially or fully supplied to the biological sludge (142) and/or the separated sewage (156).

13. Method according to one of the preceding method claims,
**characterised in that**
a valve (116) enables the sewage (112) to bypass the anaerobic reactor (114) by means of a bypass (118) and be supplied to a sludge collector (120), wherein the sludge collector (120) is used to receive the biological sludge (142) from the 3-phase separator (140).

14. Method according to one of the preceding method claims,
**characterised in that**
a flocculation aid (192) is added to the sewage (112) fermented in the anaerobic reactor (114).

## Revendications

1. Dispositif pour le traitement d'eaux usées (112) ayant les composants suivants :
a) un réacteur anaérobie (114) pour faire fermenter l'eau usée (112) de façon anaérobie ;
b) un séparateur à trois phases (140) pour fractionner de l'eau usée (112) fermentée dans le réacteur anaérobie (114), l'eau usée (112) étant divisée en boue biologique (142) et en eau usée séparée (156) contenant des matières anorganiques par dégazement, en particulier de dioxyde de carbone (152) ;
b1) des moyens (148) pour ramener au moins une partie de la boue biologique (142) dans le réacteur anaérobie (114) et/ou pour continuer d'acheminer au moins une partie de la boue biologique (142) dans au moins un autre réacteur anaérobie ;
c) un réacteur de cristallisation (158) pour favoriser la précipitation de matières anorganiques à partir de l'eau usée séparée (156) ;
d) un dispositif séparateur monté en aval (178) pour séparer les matières anorganiques précipitées à partir de l'eau usée séparée (156) ;
d1) des moyens pour transporter l'eau usée séparée (156) dans le réacteur de cristallisation (158) et/ou dans le dispositif séparateur monté en aval (178), les moyens destinés au transport de l'eau usée séparée (156) transportant l'eau usée séparée (156) par gravité ; et
e) des moyens (182) pour ramener au moins une partie des matières anorganiques précipitées en tant qu'agents de nucléation dans le réacteur de cristallisation (158) et/ou des moyens pour continuer d'acheminer au moins une partie des matières anorganiques précipitées en tant qu'agents de nucléation dans au moins un autre réacteur de cristallisation.

2. Dispositif selon la revendication précédente,
**caractérisé par**
des moyens destinés à introduire une lessive (170) dans le réacteur de cristallisation (158).

3. Dispositif selon l'une des revendications précédentes,
**caractérisé par**
des moyens destinés à introduire un gaz (190) dans le réacteur de cristallisation (158).

4. Dispositif selon l'une des revendications précédentes,
**caractérisé**
**en ce que** le transport de l'eau usée séparée (156) dans le réacteur de cristallisation (158) est réalisé par le biais d'un tuyau de descente d'une longueur minimale de 0,5 m et maximale de 1,5 m.

5. Dispositif selon l'une des revendications précédentes,
**caractérisé par**
des moyens destinés à amener une partie ou la totalité de l'eau usée purifiée (196) sortant du dispositif séparateur monté en aval (178) jusqu'à la boue biologique (142) et/ou à l'eau usée séparée (156).

6. Dispositif selon l'une des revendications précédentes,
**caractérisé par**
a) un collecteur de boue (120) destiné à recevoir la boue biologique (142) provenant du séparateur à trois phases (140) ; et par
b) une déviation (118) ayant une soupape (116) qui permet de diriger l'eau usée (112) dans le collecteur de boue (120) en contournant le réacteur anaérobie (114).

7. Dispositif selon l'une des revendications précédentes,
**caractérisé**
**en ce qu'**il présente des moyens montés en amont du séparateur à trois phases (140) destinés à ajouter un agent de floculation (192) à l'eau usée (112) fermentée dans le réacteur anaérobie (114).

8. Procédé pour le traitement d'eau usée (112) comprenant les étapes suivantes :
a) fermentation anaérobie de l'eau usée (112) dans un réacteur anaérobie (114) ;
b) fractionnement de l'eau usée (112) fermentée dans le réacteur anaérobie (114) au moyen d'un séparateur à trois phases (140), l'eau usée (112) étant divisée en boue biologique (142) et en eau usée séparée (156) contenant des matières anorganiques par dégazement, en particulier de dioxyde de carbone (152) ;
b1) retour d'au moins une partie de la boue biologique (142) dans le réacteur anaérobie (114) et/ou poursuite de l'acheminement d'au moins une partie de la boue biologique (142) dans au moins un autre réacteur anaérobie ;
b2) transport de l'eau usée séparée (156) par gravité dans un réacteur de cristallisation (158) et/ou dans un dispositif séparateur monté en aval (178) ;
c) précipitation favorisée par la cristallisation de matières anorganiques à partir de l'eau usée séparée (156) ;
d) séparation des matières anorganiques précipitées à partir de l'eau usée séparée (156) dans le dispositif séparateur monté en aval (178) ; et
e) retour d'au moins une partie des matières anorganiques précipitées en tant qu'agents de nucléation dans le réacteur de cristallisation (158) et/ou poursuite de l'acheminement d'au moins une partie des matières anorganiques précipitées en tant qu'agents de nucléation dans au moins un autre réacteur de cristallisation (158).

9. Procédé selon la revendication de procédé précédente,
**caractérisé**
**en ce qu'**une lessive (170) est introduite dans le réacteur de cristallisation (158).

10. Procédé selon l'une des revendications de procédé précédentes,
**caractérisé**
**en ce qu'**un gaz (190) est introduit dans le réacteur de cristallisation (158).

11. Procédé selon l'une des revendications de procédé précédentes,
**caractérisé**
**en ce que** l'eau usée séparée (156) effectue un trajet de descente minimal de 0,5 m et maximal de 1,5 m lors de l'introduction dans le réacteur de cristallisation (158).

12. Procédé selon l'une des revendications de procédé précédentes,
**caractérisé**
**en ce que** l'eau usée purifiée (196) sortant du dispositif séparateur monté en aval (178) est amenée en partie ou en totalité jusqu'à la boue biologique (142) et/ou à l'eau usée séparée (156).

13. Procédé selon l'une des revendications de procédé précédentes,
**caractérisé**
**en ce qu'**une soupape (116) permet de diriger l'eau usée (112) dans un collecteur de boue (120) en contournant le réacteur anaérobie (114) par le biais d'une déviation (118),
le collecteur de boue (120) servant à recevoir la boue biologique (142) provenant du séparateur à trois phases (140).

14. Procédé selon l'une des revendications de procédé précédentes,
**caractérisé**
**en ce qu'**un agent de floculation (192) est ajouté à l'eau usée (112) fermentée dans le réacteur anaérobie (114).
